# EUROPEAN PATENT APPLICATION

(11) **EP 4 703 847 A1**
(43) Date of publication of application: **04.03.2026**
(21) Application number: 25196936.6
(22) Date of filing: 20.08.2025
(51) Int. Cl.: G06F 1/3231, G03G 15/00, G06F 1/3234, H04N 1/00

(54) **ELECTRONIC APPARATUS**

(30) Priority: 03.09.2024 JP 2024151655
(71) Applicant: KYOCERA Document Solutions Inc., Osaka-shi, Osaka 540-8585 (JP)
(72) Inventor: IRITANI, Kazunobu, Osaka, 540-8585, (JP)
(74) Representative: Winter, Brandl - Partnerschaft mbB

(57) **Abstract**

An electronic apparatus includes a human sensor and a controller. The controller is configured to set a period of detection timings of a user operation to a predetermined input device and turn on/off the human sensor. Further, the controller (a) sets as the period a reference period if the human sensor is in an ON status and a human is not detected by the human sensor, and (b) sets as the period a period shorter than the reference period if the human sensor is in an OFF status.

## Description

### BACKGROUND

### 1. FIELD OF THE PRESENT INVENTION

The present invention relates to an electronic apparatus.

### 2. DESCRIPTION OF THE RELATED ART

An electronic apparatus includes an operation unit that detects a user operation at timings of a driving signal with a predetermined period, and a human sensor, and shortens the period while the human sensor detects a human and thereby improves operability.

In general, a longer period of the aforementioned driving signal results in small power consumption. Therefore, it is favorable that the reference period of the driving signal is set to be long and thereby power consumption gets small. However, when the human sensor is set to be in an OFF status in accordance with user setting or the like, even if a user approaches the electronic apparatus, the period of the driving signal is still equal to the reference period, and therefore when a user starts operation of the electronic apparatus, operability is low.

### SUMMARY

An electronic apparatus according to the present invention includes a human sensor and a controller. The controller is configured to set a period of detection timings of a user operation to a predetermined input device and turn on/off the human sensor. Further, the controller (a) sets the period to a reference period if the human sensor is in an ON status and a human is not detected by the human sensor, and (b) sets the period as a period shorter than the reference period if the human sensor is in an OFF status.

These and other objects, features and advantages of the present invention will become more apparent upon reading of the following detailed description along with the accompanied drawings.

### BRIEF DESCRIPTION OF THE DRAWINGS

Fig. 1 shows a perspective view diagram that indicates an example of an electronic apparatus according to an embodiment of the present invention;
Fig. 2 shows a block diagram that indicates an electronic configuration of the image forming apparatus 1 shown in Fig. 1; and
Fig. 3 shows a diagram that explains a period of a driving signal of an input device 61 shown in Fig. 2.

### DETAILED DESCRIPTION

Hereinafter, an embodiment according to an aspect of the present invention will be explained with reference to drawings.

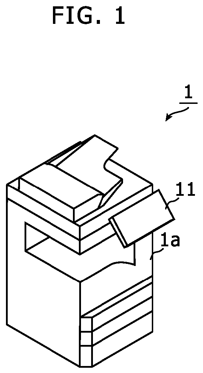

Fig. 1 shows a perspective view diagram that indicates an example of an electronic apparatus according to an embodiment of the present invention. The electronic apparatus shown in Fig. 1 is an image forming apparatus 1 such as printer, multi function peripheral. The image forming apparatus 1 includes an operation panel 11 arranged on a front face of a housing 1a.

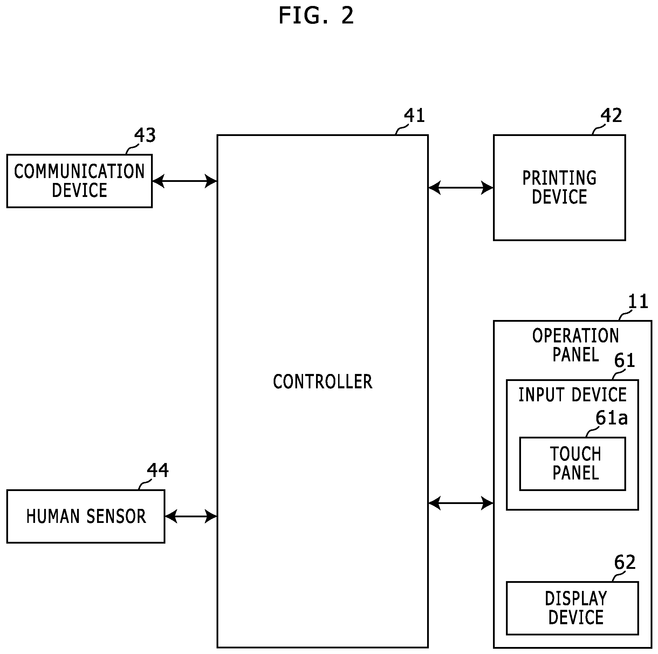

Fig. 2 shows a block diagram that indicates an electronic configuration of the image forming apparatus 1 shown in Fig. 1. As shown in Fig. 2, this image forming apparatus includes a controller 41, a printing device 42, a communication device 43, and a human sensor 44.

The controller 41 includes a computer, an ASIC (Application Specific Integrated Circuit) and/or the like and thereby embodies sorts of processing units with software and/or hardware, controls internal devices such as the operation panel 11and the printing device 42, and performs sorts of data processing.

The printing device 42 is an internal device that prints a document image. The communication device 43 such as a wireless or wired network interface, a modem or a peripheral device interface performs data communication with an unshown host device or the like.

The human sensor 44 is a sensor that detects a human who is in a predetermined distance range in front of the image forming apparatus 1.

The operation panel 11 includes an input device 61 that detects a user operation, and a display device 62 such as a liquid crystal display that displays an operation screen to a user. The input device 61 includes a touch panel 61a, a hard key and the like, and operates in accordance with a driving signal. Specifically, the input device 61 operates intermittently with a period of the driving signal.

Further, the controller 41 sets a period of detecting timings of a user operation to the input device 61 and turns on/off the human sensor 44 in accordance with user setting or the like. When the human sensor 44 is in an ON status, electric power is supplied to the human sensor 44 and a sensor signal that indicates a human detection status is outputted from the human sensor 44 to the controller 41. Contrarily, when the human sensor 44 is in an OFF status, electric power is not supplied to the human sensor 44 and the sensor signal is not outputted.

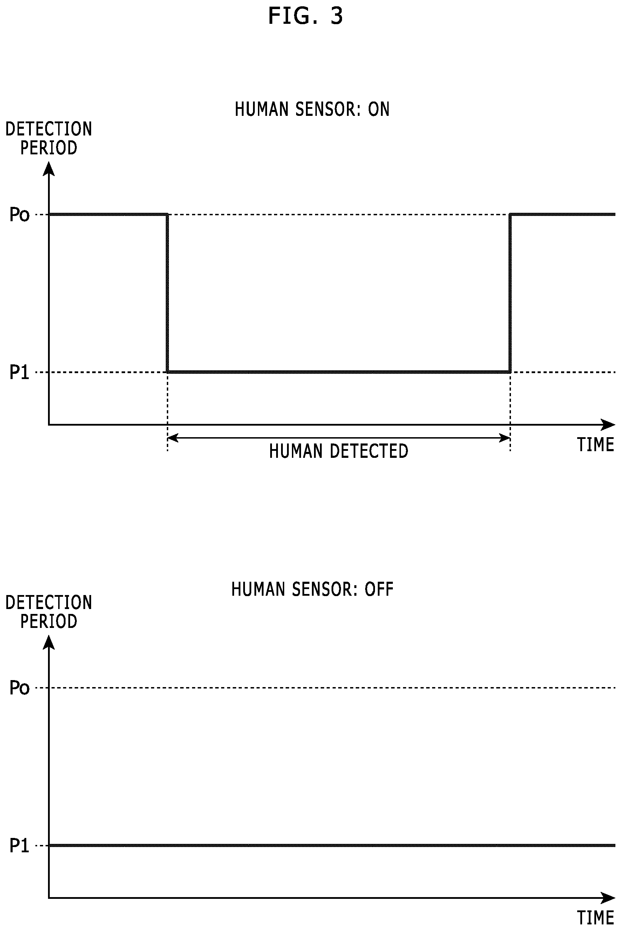

Fig. 3 shows a diagram that explains a period of a driving signal of an input device 61 shown in Fig. 2 (i.e. a period of detection timings of a user operation).

Further, as shown in Fig. 3, for example, the controller 41 (a) sets as the aforementioned period a reference period Po if the human sensor 44 is in an ON status and a human is not detected by the human sensor 44, and (b) sets as the aforementioned period a period P1 shorter than the reference period Po if the human sensor 44 is in an OFF status.

Furthermore, as shown in Fig. 3, for example, the controller 41 shortens the aforementioned period if the human sensor 44 is in an ON status and a human is detected by the human sensor 44.

It should be noted that the period that the human sensor 44 is in an ON status and a human is detected by the human sensor 44 may be identical to the period that the human sensor 44 is in an OFF status or may be larger or shorter than the period that the human sensor 44 is in an OFF status.

The following part explains a behavior of the image forming apparatus 1 in this embodiment.

When the image forming apparatus 1 starts, the controller 41 moves the human sensor 44 to either an ON status or an OFF status in accordance with user setting or the like.

If the human sensor 44 is set in an ON status, then the controller 41 determines whether a human is detected by the human sensor 44 or not on the basis of a level of the sensor signal from the human sensor 44. Further, when a human is not detected by the human sensor 44, the controller 41 sets a reference period as the period of detection timings of a user operation to the input device 61. When a human is detected by the human sensor 44, the controller 41 immediately shortens the period of detection timings of a user operation to the input device 61. If a human is no longer detected by the human sensor 44, the controller 41 returns to the reference period the period of detection timings of a user operation to the input device 61.

Contrarily, if the human sensor 44 is turned to an OFF status, then the controller 41 continuously sets as the period of detection timings of a user operation to the input device 61 a period P1 shorter than the aforementioned reference period Po.

As mentioned, in the aforementioned embodiment, the controller 41 sets a period of detection timings of a user operation to the input device 61 and turns on/off the human sensor 44. Further, the controller 41 (a) sets as the aforementioned period a reference period if the human sensor 44 is in an ON status and a human is not detected by the human sensor 44, and (b) sets as the aforementioned period a period shorter than the reference period if the human sensor 44 is in an OFF status.

Consequently, even if the human sensor 44 is set in an OFF status, operability is favorable.

It should be understood that various changes and modifications to the embodiments described herein will be apparent to those skilled in the art. Such changes and modifications may be made without departing from the spirit and scope of the present subject matter and without diminishing its intended advantages. It is therefore intended that such changes and modifications be covered by the appended claims.

For example, in the aforementioned embodiment, if the human sensor 44 is in an OFF status, the input device 61 may be caused not to operate intermittently with a period of the driving signal but to operate continuously.

Further, in the aforementioned embodiment, the controller 41 (a) may change an operation mode of the image forming apparatus 1 among a normal operation mode and a power saving mode in which power consumption is smaller than power consumption in the normal operation mode, and (b) may set as the reference period in the power saving mode a period longer than the reference period in the normal operation mode.

## Claims

1. An electronic apparatus comprising:
a human sensor; and
a controller configured to set a period of detection timings of a user operation to a predetermined input device and turn on/off the human sensor;
wherein the controller sets as the period a reference period if the human sensor is in an ON status and a human is not detected by the human sensor, and sets as the period a period shorter than the reference period if the human sensor is in an OFF status.

2. The electronic apparatus according to claim 1, wherein the controller shortens the period if the human sensor is in an ON status and a human is detected by the human sensor.

3. The electronic apparatus according to claim 1, wherein the controller changes an operation mode of this electronic apparatus among a normal operation mode and a power saving mode in which power consumption is smaller than power consumption in the normal operation mode, and sets as the reference period in the power saving mode a period longer than the reference period in the normal operation mode.
